# EUROPÄISCHE PATENTSCHRIFT

(11) **EP 3 262 657 B1**
(45) Veröffentlichungstag und Bekanntmachung des Hinweises auf die Patenterteilung: **02.01.2019**
(21) Anmeldenummer: 16703302.6
(22) Anmeldetag: 05.02.2016
(51) Int. Cl.: G21C 17/06

(54) **VORRICHTUNG UND VERFAHREN ZUR PRÜFUNG EINES BRENNSTABES EINES BRENNELEMENTS**
DEVICE AND METHOD FOR CHECKING A FUEL ROD OF A FUEL ELEMENT
DISPOSITIF ET PROCÉDÉ DE CONTRÔLE D'UNE BARRE DE COMBUSTIBLE D'UN ÉLÉMENT COMBUSTIBLE

(30) Priorität: 25.02.2015 DE 102015102732
(43) Veröffentlichungstag der Anmeldung: 03.01.2018
(73) Patentinhaber: Framatome GmbH, 91052 Erlangen (DE)
(72) Erfinder: HUMMEL, Wolfgang, 92318 Neumarkt (DE)
(74) Vertreter: Schlögl, Markus
(86) Internationale Anmeldenummer: PCT/EP2016/052528
(87) Internationale Veröffentlichungsnummer: WO 2016/134956

(56) Entgegenhaltungen:
- WO-A1-2007/071337
- FR-A1- 2 509 898
- US-A- 4 016 749

## Beschreibung

Die Erfindung betrifft eine Vorrichtung sowie ein Verfahren zur Prüfung eines Brennstabes eines Brennelementes in einem mit Wasser gefülltem Becken einer nukleartechnischen Anlage.

Während des Betriebs von Kernreaktoren können einzelne Brennstäbe Defekte aufweisen und undicht werden, wodurch ein Austreten von radioaktiven Spaltprodukten in das Kühlmittel möglich ist und dessen Radioaktivität erhöht wird. Dies wiederum führt zu einer unerwünschten Erhöhung der Strahlenbelastung in der Nähe des Kühlsystems. Brennstäbe werden deshalb üblicherweise bei jedem Brennstab- bzw. Brennelementwechsel einer Prüfung auf Defekte unterzogen. Hierfür ist es beispielsweise bekannt, die Brennstäbe, die nicht im Einsatz sind und in einem mit Wasser gefülltem Lagerbecken lagern, in sogenannte heiße Zellen zu transportieren und dort zu prüfen, was allerdings sehr aufwendig ist. Eine Prüfung in dem mit Wasser gefülltem Becken selbst, gestaltet sich jedoch schwierig, da die verwendeten Messgeräte oftmals sehr strahlungsempfindlich sind und nur in einer wasserfreien Umgebung eine einwandfreie Funktionalität gewährleistet werden kann.

Aus der EP 2 208 206 B1 ist beispielsweise eine Vorrichtung zur Prüfung eines Brennelements in einem Lagerbecken einer Nuklearanlage bekannt, bei der das Brennelement mit einem verschiebbar angeordneten Bilddetektor, z.B. einem Photoapparat, unter Wasser geprüft wird, wobei eine parallel zu einer Längsachse des Brennelements angeordnete Skala zur Lokalisierung von Defekten in dem Brennelement vorgesehen ist.

Die DE 24 24 431 beschreibt beispielsweise eine Vorrichtung und ein Verfahren zur Lokalisierung defekter Brennstäbe innerhalb eines Brennelements, bei der das Brennelement in einem von einer Glocke abgedeckten, in einem Wasserbecken lagernden Prüfbehälter steht, wobei in der Glocke ein Messgerät angeordnet ist und das in der Glocke befindliche Wasser mittels Gasstrom herausgepresst wird, um für einen wasserfreien Raum zwischen dem Messgerät und dem Brennstab zu sorgen. Eine solche Vorrichtung erlaubt jedoch nur eine Prüfung der oberen Stabenden bzw. eine Unterscheidung von insgesamt defekten und unbeschädigten Brennstäben.

Die Dokumente WO 2007/071337 A1 und US 4.016.749 A beschreiben weitere Vorrichtungen und Verfahren zur Untersuchung von Brennstäben bzw. Brennelementen auf Defekte.

Es ist daher Aufgabe der Erfindung eine Vorrichtung und ein Verfahren anzugeben, welche eine verbesserte Prüfung eines Brennstabes in einem mit Wasser gefülltem Becken einer nukleartechnischen Anlage ermöglichen.

Die erstgenannte Aufgabe wird gelöst mit einer Vorrichtung zur Prüfung eines Brennstabes eines Brennelements in einem mit Wasser gefülltem Becken einer nukleartechnischen Anlage unter Wasser mit den Merkmalen gemäß Patentanspruch 1.

Die Vorrichtung umfasst einen Prüfbehälter mit einer ersten und einer zweiten Kammer und eine in dem Prüfbehälter angeordnete erste Prüfeinrichtung. Der Prüfbehälter weist zumindest eine Einlassöffnung und zumindest eine Auslassöffnung auf. Zudem umfasst der Prüfbehälter zumindest eine Einführöffnung zur Einführung des Brennstabes in die zweite Kammer. Die erste und die zweite Kammer sind über einen Verbindungskanal miteinander verbunden, wobei in dem Verbindungskanal ein Ventil angeordnet ist.

Der Prüfbehälter ist zur Prüfung des Brennstabes in das mit Wasser gefüllte Becken absenkbar, sodass eine Prüfung in dem mit Wasser gefülltem Becken, beispielsweise einem Lagerbecken oder einem Abklingbecken, unter Wasser erfolgen kann. Der zu prüfende Brennstab ist über die Einführöffnung in die zweite Kammer einführbar. Die erste Prüfeinrichtung ist in dem Prüfbehälter in der ersten Kammer bzw. in unmittelbarem Kontakt zu der ersten Kammer, insbesondere in einem oberen Bereich der ersten Kammer angeordnet. Mit anderen Worten: Die erste Prüfeinrichtung ist derart im Prüfbehälter angeordnet, dass sie von der zweiten Kammer, in welche der Brennstab einführbar ist, durch den Verbindungskanal räumlich getrennt ist. Dies hat den Vorteil, dass bei Wassereintritt die erste Prüfeinrichtung durch das in dem Verbindungskanal angeordnete Ventil, welches in Schließstellung bewegbar ist, vor dem Wasser geschützt werden kann. Die erste Prüfeinrichtung und der Brennstab sind also in unterschiedlichen Kammern angeordnet, welche durch einen Verbindungskanal miteinander verbunden sind, welcher durch ein darin angeordnetes Ventil verschließbar ist.

Durch die Einlassöffnung strömt ein Fluid bzw. ein Gas in eine der Kammern ein, wobei der Gaseinlass beispielsweise über ein Ventil steuerbar ist. Durch das Einströmen des Gases ist das innerhalb des Prüfbehälters bzw. innerhalb der Kammern und/oder des Verbindungskanals vorhandene Wasser, welches beispielsweise durch das Absenken des Prüfbehälters in das mit Wasser gefüllte Becken oder durch die Einführung des Brennstabes eingetreten ist, durch die zumindest eine Auslassöffnung ausspülbar. Die Einlassöffnung und die Auslassöffnung sind also derart fluidisch miteinander verbindbar, dass das einströmende Fluid bzw. Gas das Wasser aus den Kammern bzw. aus dem Innenraum des Prüfbehälters verdrängt und durch die Auslassöffnung herausdrückt.

Das Ventil, welches den Durchfluss des Fluides zwischen der ersten und der zweiten Kammer regelt und zum Schutz der ersten Prüfeinrichtung zwischen einer Öffnungs- und einer Schließstellung bewegbar ist, ist beispielsweise ein Absperrventil der bekannten Art.

Mit der erfindungsgemäßen Vorrichtung ist es somit möglich, einen Brennstab auch in einem Wasserbecken zu prüfen, da eine wasserempfindliche Prüfeinrichtung bzw. eine Prüfeinrichtung, welche lediglich in einer wasserfreien Umgebung zuverlässige Messwerte liefert, vor Wasser geschützt wird bis das bei der Einführung des Brennstabes eingedrungene Wasser wieder aus dem Innenraum des Prüfbehälters entfernt ist. Zur Prüfung des Brennstabes mit der ersten Prüfeinrichtung wird das Ventil geöffnet und die Prüfung durchgeführt.

Sowohl die Einlassöffnung als auch die Auslassöffnung können dabei in der zweiten Kammer angeordnet sein, sodass die erste Kammer überhaupt nicht mit dem mit Wasser gefülltem Becken in Kontakt steht. Ohne gezielte Belüftung der ersten Kammer besteht jedoch die Gefahr, dass nach dem Öffnen des Ventils zumindest feuchte Luft in die erste Kammer gelangt und sich als Kondensat auf der ersten Prüfeinrichtung niederschlägt. Um dies zu vermeiden, führt die zumindest eine Einlassöffnung vorzugsweise in die erste Kammer des Prüfbehälters, ist also in einer die erste Kammer umgebenden bzw. bildenden Wand des Prüfbehälters angeordnet. Durch Zuführung des Gases wird somit - nach dem Öffnen des Ventils - das Wasser aus dem gesamten Innenraum des Prüfbehälters, also der ersten Kammer, dem Verbindungskanal und der zweiten Kammer ausgetrieben. Dass die Einlassöffnung in der ersten Kammer angeordnet ist, hat den Vorteil, dass das Wasser stets in Richtung der zweiten Kammer und somit weg von der ersten Prüfeinrichtung aus dem Innenraum ausgeblasen wird, sodass ein Feuchtigkeitseintrag von der zweiten in die erste Kammer weitgehend vermieden wird.

Grundsätzlich wäre es ausreichend die zumindest eine Auslassöffnung in der zweiten Kammer vorzusehen. Es ist aber von Vorteil, wenn der Prüfbehälter eine erste Auslassöffnung in der ersten Kammer und eine zweite Auslassöffnung in der zweiten Kammer, also in jeder der beiden Kammern eine Auslassöffnung aufweist. Bei ebenfalls in der ersten Kammer angeordneter Einlassöffnung lässt sich die erste Kammer, in der die erste Prüfeinrichtung angeordnet ist, kontinuierlich mit Gas durchströmen, bleibt somit stets wasserfrei und die erste Prüfeinrichtung ist geschützt. Die erste Kammer lässt sich dadurch also auch bei noch geschlossenem Ventil gezielt belüften.

Bei einer bevorzugten Ausgestaltung weist die Vorrichtung eine zweite Einlassöffnung auf, die in die zweite Kammer des Prüfbehälters führt. Sowohl der ersten Kammer als auch der zweiten Kammer ist also jeweils eine Einlass- als auch eine Auslassöffnung zugeordnet, sodass beide Kammern unabhängig voneinander belüftet werden können. Die Einlass- und die Auslassöffnungen sind jeweils durch ein Ventil verschließbar.

Bei einer bevorzugten Ausgestaltung weist der Prüfbehälter neben der Einführöffnung zur Einführung des Brennstabes in die zweite Kammer, eine Ausführöffnung auf, welche bezüglich einer Achse hinter der Einführöffnung liegt. Die Einführöffnung und die Ausführöffnung sind also in einer Linie hintereinander angeordnet. Dadurch lässt sich die Vorrichtung bzw. der Prüfbehälter kompakter ausgestalten und dennoch eine vollständige Prüfung des Brennstabes durchführen. Der Brennstab ist durch die Einführöffnung einführbar und durch die, der Einführöffnung gegenüberliegende Ausführöffnung ausführbar, sodass mehrere Axialabschnitte des Brennstabes, also Bereiche entlang seiner Längsachse, geprüft werden können. Der Brennstab kann somit durch die zweite Kammer hindurch bewegt werden, sodass eine Prüfung des Brennstabes auf seiner gesamten Länge erfolgen kann.

Vorzugsweise schließt sich an die Einführöffnung und/oder an die Ausführöffnung jeweils ein von der Wand des Prüfbehälters gebildeter Führungskanal an. Eine solche Führungseinrichtung aus Öffnung und Kanal erleichtert die geradlinige Einführung des Brennstabes in die zweite Kammer sowie dessen Ausführung aus der zweiten Kammer. Der Führungskanal erstreckt sich dabei von einer Einführöffnung am - in Bezug auf das Becken - oberen Ende des Prüfbehälters hin zu der zweiten Kammer. Ein weiterer Führungskanal erstreckt sich von einer Ausführöffnung in der zweiten Kammer bis hin zu einem - in Bezug auf das Becken - unterem Ende des Prüfbehälters.

Die erste Prüfeinrichtung ist vorzugsweise ein spektroskopisches Messgerät, insbesondere ein Infrarot-Messgerät, wie z.B. eine Infrarotkamera, ein Infrarotsensor oder ein anderes spektrometrisches Messgerät, welches die von dem Brennstab ausgehende Strahlung, insbesondere Wärmestrahlung, detektiert. Sind auf der Oberfläche des Brennstabes unterschiedlich wärmeleitende bzw. unterschiedlich dicke Schichten, z.B. Oxidschichten oder sonstige Ablagerungen, vorhanden, können diese mittels Infrarotmesstechnik visualisiert werden. Bei blanken Oberflächen, welche vor der Prüfung gebürstet wurden, lassen sich innerhalb des Hüllrohres des Brennstabes auftretende Unterschiede in der Wärmeleitung erfassen. Diese resultieren beispielsweise aus Inhomogenitäten in dem Spaltbereich zwischen den Pellets und der Innenseite des Hüllrohres, was z.B. durch Pelletseparation oder durch von den Pellets abgeplatzten Bruchstücken verursacht werden kann. Eine Spektralanalyse des mit dem spektroskopischen Messgerät aufgenommenen Spektrums erlaubt zudem eine Untersuchung oder Identifizierung der Zusammensetzung des Materials des Brennstabes.

Bei einer bevorzugten Weiterbildung der Erfindung ist in der zweiten Kammer des Prüfbehälters eine zweite Prüfeinrichtung angeordnet. Die zweite Prüfeinrichtung ist beispielsweise eine herkömmliche strahlungsresistente und wasserunempfindliche Kamera. Vorzugsweise ist in der zweiten Kammer zudem eine Lichtquelle angeordnet, sodass der Brennstab vor einer Prüfung mit der ersten Prüfeinrichtung mit der zweiten Prüfeinrichtung erste Beschädigungen feststellbar sind. Weist die Vorrichtung zudem eine zweite Einlassöffnung auf, die in die zweite Kammer des Prüfbehälters führt, kann die zweite Kammer bereits für die Prüfung mit der zweiten Prüfeinrichtung entlüftet werden. Dies hat den Vorteil, dass das Ventil dann jederzeit während der Prüfung mit der zweiten Prüfeinrichtung geöffnet werden kann, um eine mit der ersten Prüfeinrichtung näher zu untersuchende Position des Brennstabes prüfen zu können, ohne zuvor eine Belüftung der zweiten Kammer vornehmen zu müssen.

Um die Prüfeinrichtungen vor der von dem Brennstab ausgehenden Strahlung, insbesondere γ-Strahlung, zu schützen, ist es von Vorteil, wenn die erste und/oder die zweite Prüfeinrichtung von einer Abschirmeinrichtung umgeben sind.

Ein weiterer Schutz der Prüfeinrichtungen vor Strahlung, wird insbesondere dadurch erreicht, dass zumindest ein Spiegel in der ersten Kammer und/oder in der zweiten Kammer des Prüfbehälters angeordnet ist. Ein in der ersten Kammer im Strahlengang der ersten Prüfeinrichtung, z.B. der Infrarot-Kamera, angeordneter Spiegel verringert eine Beeinflussung der Prüfung durch die vom Brennstab ausgehende radioaktive Strahlung. Der Spiegel ist derart im Strahlengang angeordnet, dass eine vom Brennstab ausgehende Strahlung in ein Eintrittsfenster der ersten Prüfeinrichtung gelenkt wird. Als Spiegel kommen beispielsweise ein halbdurchlässiger Spiegel oder ein Faltspiegel in Betracht.

Zur Einführung des Brennstabes in den Prüfbehälter sowie zur Auf- und Abwärtsbewegung und Rotation des Brennstabes während der Prüfung umfasst die Vorrichtung vorteilhafterweise ein Handhabungswerkzeug bzw. Betätigungsmittel wie beispielsweise einen Greifer. Dieses greift den Brennstab an seinem oberen Ende und führt ihn in die zweite Kammer ein. Es bietet sich an, hierfür ein bereits am Lager- oder Abklingbecken vorhandenes Handhabungswerkzeug zu nutzen.

Um ein Eindringen von Wasser in den Prüfbehälter bzw. in die zweite Kammer bei bereits eingeführtem Brennstab zu minimieren, weist die Vorrichtung bei einer vorteilhaften Ausgestaltung eine Dichteinrichtung auf, welche die zweite Kammer gegenüber dem mit Wasser gefülltem Becken verschließt. Zwar werden die zweite Kammer bzw. die Einführ- und gegebenenfalls die Ausführöffnungen bereits durch den Brennstab selbst weitgehend abgedichtet, die Dichteinrichtung erlaubt es jedoch, ein Eintreten von Wasser während der Prüfung auf ein Minimum zu reduzieren.

Die Dichteinrichtung umfasst insbesondere ein flexibles Dichtelement, welches die Einführ- und gegebenenfalls die Ausführöffnung bzw. den zumindest einen Führungskanal vollständig umgreift. Mit anderen Worten: Die Dichteinrichtung verschließt einen zwischen der den Führungskanal bildenden Wand des Prüfbehälters und dem Brennstab vorhandenen Spalt. Ist ein oberer und ein unterer Führungskanal, also eine Einführöffnung und eine Ausführöffnung vorhanden, sind beispielsweise zwei ringförmige Dichtelemente vorgesehen. Diese sind vorzugsweise mit Gas befüllbar bzw. aufblasbar, sodass diese bei eingeführtem Brennstab aktiviert werden können, um die Öffnungen weiter abzudichten.

In einer weiteren bevorzugten Ausführungsform ist der Prüfbehälter derart ausgestaltet, dass der Brennstab und zumindest ein Teil des Handhabungs- bzw. Betätigungsmittel vollständig innerhalb der zweiten Kammer angeordnet sind und der Innenraum der zweiten Kammer mit einem Dichtelement gegenüber dem mit Wasser gefülltem Becken abgedichtet ist. Hierfür ist es prinzipiell möglich, den Prüfbehälter selbst derart auszugestalten, dass der Brennstab vollständig darin einführbar ist. Es ist jedoch von Vorteil, wenn der Prüfbehälter weitere, einen Innenraum aufweisende Prüfgehäuse aufweist, die sich an die zweite Kammer anschließend an einer Ober- bzw. Unterseite des Prüfbehälters montierbar sind. Mit anderen Worten: Die Dichteinrichtung umfasst zumindest ein zusätzliches Prüfgehäuse, welches den Brennstab und zumindest einen Teil des Handhabungs- bzw. Betätigungsmittels außerhalb des Prüfbehälters vollständig abdeckt. Das Dichtelement ist in dem zusätzlichen Prüfgehäuse z.B. in einem Bereich des Handhabungswerkzeuges angeordnet, um den von der zweiten Kammer und dem zumindest einen zusätzlichen Prüfgehäuses gebildeten Innenraum vollständig gegenüber dem mit Wasser gefüllten Becken abzudichten. Das Dichtelement verschließt also einen zwischen der Wand des zusätzlichen Prüfgehäuses und dem Handhabungswerkzeuges vorhandenen Spalt.

Die zweitgenannte Aufgabe wird gelöst mit einem Verfahren zur Prüfung eines Brennstabes eines Brennelements in einem Wasserbecken einer nukleartechnischen Anlage mit den Merkmalen gemäß Patentanspruch 14. Dabei wird eine entsprechend den vorstehend beschriebenen Merkmalen ausgebildete Vorrichtung verwendet, sodass zunächst auf die bisherigen Ausführungen verwiesen wird.

Der Brennstab wird zunächst bei geschlossenem Ventil durch die Einführöffnung bzw. den Führungskanal in die zweite Kammer des Gehäuses eingeführt. Dies erfolgt beispielsweise mit dem Handhabungswerkzeug bzw. Betätigungswerkzeug, welches den Brennstab in dem mit Wasser gefüllten Becken bewegen kann. Der Prüfbehälter ist während diesem Schritt bereits in das mit Wasser geflutete Becken abgesenkt, sodass die zweite Kammer des Prüfbehälters mit Wasser geflutet ist.

Über die Einlassöffnung des Prüfbehälters wird ein Fluid bzw. Gas zugeführt, welches durch den Innenraum des Prüfbehälters strömt und das Wasser verdrängt. Ist die Einlassöffnung in der zweiten Kammer angeordnet, wird das beim Einführen des Brennstabes in die zweite Kammer eingetretene Wasser aus der Auslassöffnung und somit aus der zweiten Kammer herausgedrückt. Ist die Einlassöffnung in der ersten Kammer angeordnet, strömt das Fluid durch den Verbindungskanal in die zweite Kammer, sobald das Ventil geöffnet wird und verdrängt das Wasser aus dem gesamten Innenraum des Prüfbehälters. Befindet sich die Einlassöffnung in der ersten Kammer und weist die erste Kammer zudem eine Auslassöffnung auf, wird bereits während der Einführung des Brennstabes in die zweite Kammer Gas zugeführt, um die erste Kammer möglichst frei von Wasser zu halten.

Zur Prüfung des Brennstabes mit der ersten Prüfeinrichtung wird das in dem Verbindungskanal zwischen der ersten und der zweiten Kammer angeordnete Ventil geöffnet, sodass der Brennstab in das Sichtfeld der ersten Prüfeinrichtung tritt. Ist das Wasser nahezu vollständig aus dem Innenraum des Prüfbehälters entfernt worden erfolgt die Prüfung des Brennstabes mit der ersten Prüfeinrichtung.

Vorzugsweise wird der Gasstrom während der Prüfung des Brennstabes aufrechterhalten, also kontinuierlich Fluid in den Innenraum des Prüfbehälters zugeführt, um ein Eindringen von Wasser in die erste und/oder zweite Kammer durch eine der Auslassöffnungen zu verhindern bzw. den Innenraum des Prüfbehälters wasserfrei zu halten. Dabei ist die Temperatur des zugeführten Fluides einstellbar, sodass die Genauigkeit der Prüfung, welche wesentlich von dem Temperaturverhältnis zwischen der Temperatur innerhalb der Kammern und der Oberflächentemperatur des Brennstabes abhängt, positiv beeinflusst werden kann.

Bei einer vorteilhaften Ausführungsform wird das Ventil erst geöffnet, sobald die Dichteinrichtung die zweite Kammer gegenüber dem mit Wasser gefülltem Becken verschließt. Wird ein Dichtelement entsprechend eines den Führungskanal umschließenden ringförmigen, aufblasbaren Dichtelements verwendet, wird dieses aufgeblasen, sobald der Brennstab vollständig eingeführt ist, um ein Eindringen von Wasser durch den zwischen der Wand des Prüfbehälters und dem Brennstab vorhandenen restlichen Spalt weiter zu reduzieren.

Bei einer bevorzugten Weiterbildung des Verfahrens, wird der Brennstab nach dessen Einführen in den Prüfbehälter zunächst bei geschlossenem Ventil mit der zweiten Prüfeinrichtung geprüft, die in der zweiten Kammer angeordnet ist. Dabei wird der Brennstab während der Prüfung entlang einer, parallel zu einer Längsachse des Brennstabes verlaufenden Richtung auf- und ab bewegt und/oder um die Längsachse rotiert, sodass eine Inspektion an mehreren Axialabschnitten des Brennstabes erfolgen kann. Der Brennstab wird also zunächst mit der zweiten Prüfeinrichtung inspiziert, um einen relevanten Teil- bzw. Längsabschnitt des Brennstabes zu ermitteln. Wird als zweite Prüfeinrichtung ein wasserunempfindliches Messgerät verwendet, kann dies erfolgen, ohne das Wasser zuvor aus der zweiten Kammer verdrängen zu müssen.

Eine genauere Betrachtung dieses Abschnittes des Brennstabes erfolgt im Anschluss wie mithilfe der ersten Prüfeinrichtung. Während der Prüfung mit der ersten Prüfeinrichtung, z.B. mit der Infrarotkamera, bleibt der Brennstab ortsfest. Der zu inspizierende Teilabschnitt wird daher zuvor derart ausgerichtet, dass er sich in einem Blickfeld der ersten Prüfeinrichtung befindet. Hierfür wird der Brennstab beispielsweise soweit gedreht, dass die zu prüfende Stelle mit Blickrichtung zur Infrarotkamera, z.B. auch unter Zwischenschaltung des Spiegels, ausgerichtet ist. Um die Prüfung mit der Infrarotkamera durchführen zu können wird die Dichteinrichtung aktiviert, also z.B. die beiden Dichtungen aufgeblasen, das Wasser aus der zweiten Kammer ausgeblasen und das Ventil geöffnet. Durch eine solche Vorinspektion mithilfe einer weiteren Prüfeinrichtung wird der Aufwand für eine Messung mit der ersten, wasserempfindlichen Prüfeinrichtung, z.B. des Infrarot-Messgerätes, deutlich reduziert.

Die Erfindung wird nachstehend auch hinsichtlich weiterer Merkmale und Vorteile anhand der Beschreibung von Ausführungsbeispielen und unter Bezugnahme auf die beiliegende Zeichnungen näher erläutert. Es zeigen jeweils in einer schematischen Prinzipskizze:
- FIG 1: eine Vorrichtung zur Prüfung eines Brennstabes eines Brennelements bei geschlossenem Ventil,
- FIG 2: eine Vorrichtung zur Prüfung eines Brennstabes eines Brennelements mit geöffnetem Ventil,
- FIG 3: eine Vorrichtung zur Prüfung eines Brennstabes eines Brennelementes mit einem zusätzlichen Prüfgehäuse mit geöffnetem Ventil.

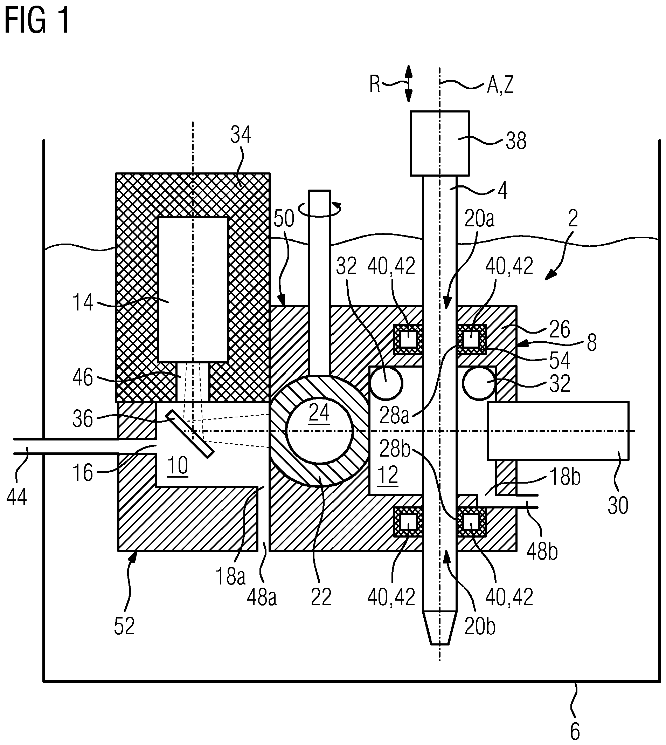

Fig. 1 zeigt eine Vorrichtung 2 zur Prüfung eines Brennstabes 4 eines Brennelements (nicht dargestellt) in einem mit Wasser gefülltem Becken 6 einer nukleartechnischen Anlage mit eingeführtem Brennstab 4 und geschlossenem Ventil 24.

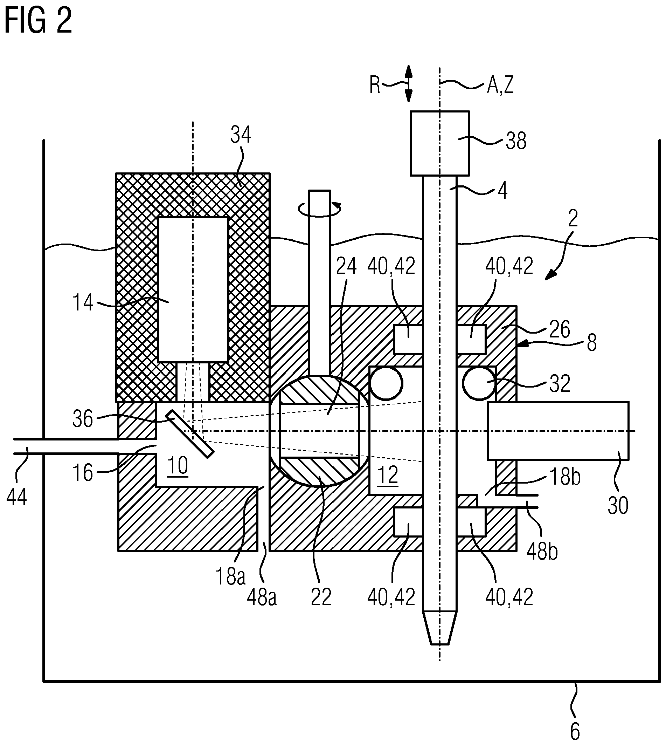

Die Vorrichtung 2 umfasst einen Prüfbehälter 8, welcher in das mit Wasser geflutete Becken 6 abgesenkt ist. Der Prüfbehälter 8 weist einen von einer ersten Kammer 10, einer zweiten Kammer 12 sowie einem Verbindungskanal 22 gebildeten Innenraum auf. In dem Verbindungskanal 22 ist ein Ventil 24, hier ein Absperrventil, das zwischen einer Offenstellung (Fig. 2) und einer Schließstellung (Fig. 1) zum Öffnen und Schließen des Verbindungskanals 22 bewegbar ist und somit zur Herstellung einer fluidischen Verbindung zwischen der ersten Kammer 10 und der zweiten Kammer 12 vorgesehen.

In der ersten Kammer 10 ist als Prüfeinrichtung 14 ein Infrarot-Messgerät bzw. eine Infrarot-Kamera angeordnet. Um die strahlenempfindliche Prüfeinrichtung 14 vor der von dem Brennstab 4 ausgehenden radioaktiven Strahlung zu schützen ist die Prüfeinrichtung 14 von einer Abschirmeinrichtung 34 umgeben. Die Prüfeinrichtung 14 ist parallel zu dem Brennstab 4 angeordnet, sodass deren Austritts- bzw. Eintrittsfenster 46 für die Infrarot-Strahlung in Richtung der zweiten Kammer 12 zeigt.

Über eine erste Einlassleitung 44 und eine in der Wand 26 der ersten Kammer 10 vorhandene erste Einlassöffnung 16 strömt Gas in die erste Kammer ein. In der Wand 26 der zweiten Kammer 12 können eine zweite Einlassöffnung 44 und eine zweite Einlassöffnung 16 vorgesehen sein, welche in die zweite Kammer 12 münden und womit die zweite Kammer 12 separat belüftet werden kann. In der die erste Kammer 10 umgebenden Wand 26 ist an der Unterseite 52 des Prüfbehälters 8 eine Auslassöffnung 18a vorhanden, die über einen Auslasskanal 48a in das mit Wasser geflutete Becken 6 führt. Auch in der die zweite Kammer 12 umgebenden Wand 26 ist seitlich eine Auslassöffnung 18b vorhanden, die wiederum über einen Auslasskanal 48b in das mit Wasser geflutete Becken 6 führt.

Zur Einführung des Brennstabes 4 in die zweite Kammer 12 weist der Prüfbehälter 8 an einer Oberseite 50 eine Einführöffnung 20a auf. Eine bezüglich der Achse Z, welche parallel zu einer Mittellängsachse A des Brennstabes verläuft, hinter der Einführöffnung 20a liegende Ausführöffnung 20b dient zur Ausführung des Brennstabes 4 aus der Kammer 12, sodass der Brennstab 4 durch die Kammer 12 hindurch bewegt werden kann, um mehrere, parallel zu bzw. entlang einer Mittellängsachse A des Brennstabes 4 verlaufende Axialabschnitte prüfen zu können. Sowohl an die Einführöffnung 20a als auch an die Ausführöffnung 20b schließt sich jeweils ein von der Wand 26 des Prüfbehälters 8 gebildeter Führungskanal 28a, b an, wobei der Führungskanal 28a von einer Oberseite 50 des Prüfbehälters 8 in die zweite Kammer 12 und der Führungskanal 28b von der zweiten Kammer 12 zu einer Unterseite 52 des Prüfbehälters 8 führt. Der Führungskanal 28a, b verhindert ein übermäßiges Verkippen des Brennstabes 4, sodass dieser einfacher in die zweite Kammer 12 ein- und ausgeführt werden kann.

Die Vorrichtung 2 umfasst zudem eine zweite Prüfeinrichtung 30, die derart in der zweiten Kammer 12 des Prüfbehälters 8 angeordnet ist, dass sich der eingeführte Brennstab 4 in deren Blickfeld befindet. Die zweite Prüfeinrichtung 30 ist vorliegend eine strahlungsunempfindliche Kamera, sodass keine Abschirmeinrichtung 34 erforderlich ist. Zur Prüfung des Brennstabes 4 mit der zweiten Prüfeinrichtung 30 ist eine Lichtquelle 32 in der zweiten Kammer 12 vorgesehen.

In der ersten Kammer 10 ist ein Spiegel 36 angeordnet, um die vom Brennstab 4 ausgehende Wärmestrahlung in das Eintrittsfenster 46 der ersten Prüfeinrichtung 14 bzw. der Infrarot-Kamera zu lenken. Durch den Spiegel 36 kann die Strahlenbelastung für die erste Prüfeinrichtung 14 weiter reduziert werden, da sie nicht direkt der vom Brennstab 4 ausgehenden radioaktiven Strahlung ausgesetzt ist.

Zur Einführung des Brennstabes 4 in den Prüfbehälter 8 und zu dessen Bewegung parallel zu einer Richtung R sowie zu einer Rotation um eine Längsachse A des Brennstabes 4 während der Prüfung umfasst die Vorrichtung ein Handhabungswerkzeug 38, beispielsweise einen Greifer, welcher bereits zum Transport der Brennstäbe 4 in dem mit Wasser geflutetem Becken 6 vorhanden ist.

Ferner umfasst die Vorrichtung 2 eine Dichteinrichtung 40, mit der die zweite Kammer 12 gegenüber dem mit Wasser gefülltem Becken 6 verschließbar ist. Die Dichteinrichtung 40 umfasst zwei Dichtelemente 42, welche jeweils in einer an den Führungskanal 28a, b angrenzenden Ausnehmung 54 der Wand 26 des Prüfbehälters 8 angeordnet sind und jeweils einen Führungskanal 28a, b vollständig umgreifen. Die Dichtelemente 42 sind - wie in Fig. 2 dargestellt - mit Gas oder flüssigem Medium befüllbar, sodass ein gegebenenfalls zwischen dem eingeführten Brennstab 4 und dem Führungskanal 28a, b vorhandener Spalt vollständig verschließbar ist.

Zur Prüfung des Brennstabes 4 in dem mit Wasser gefluteten Becken der nukleartechnischen Anlage wird der Brennstab 4 bei geschlossenem Ventil 24 durch die Einführöffnung 20a in die zweite Kammer 12 des Prüfbehälters 8 eingeführt (Fig. 1). Dabei wird durch den Einlasskanal 44 und die Einlassöffnung 16 Gas zugeführt, um das Restwasser aus der zweiten Kammer 10 zu verdrängen bzw. einen Wassereintritt durch die Auslassöffnung 18a und den Auslasskanal 48a zu vermeiden. Die Zuführung des Gases wird während der Prüfung des Brennstabes 4 aufrechterhalten.

Ist der Brennstab 4 vollständig eingeführt, erfolgt zunächst bei weiterhin geschlossenem Ventil 24 und bei eingeschalteter Lichtquelle 32 eine Prüfung mit der zweiten Prüfeinrichtung 30, welche in der zweiten Kammer 12 angeordnet ist. Zur Prüfung mehrerer Axialabschnitte bzw. der gesamten Oberfläche des Brennstabes 4 wird dieser während der Prüfung mit der zweiten Prüfeinrichtung 30 parallel zu der Richtung R auf und ab bewegt sowie um seine Längsachse A rotiert.

Wird bei der Prüfung mit der zweiten Prüfeinrichtung 30 eine näher zu untersuchende Stelle erfasst, erfolgt dann eine zusätzliche Prüfung mit der ersten Prüfeinrichtung 14. Prinzipiell wäre es jedoch auch möglich den gesamten Brennstab 4 mit der ersten Prüfeinrichtung 14 zu prüfen.

Zur Prüfung des Brennstabes mit der ersten Prüfeinrichtung 14 wird dieser mithilfe des Handhabungswerkzeuges 38 um 180° gedreht, sodass die zu prüfende Oberflächenposition der ersten Prüfeinrichtung 14 zugewandt ist. Die beiden Dichtelemente 42 werden mit Luft befüllt, sodass ein Wassereintritt vermieden wird. Anschließend wird das Ventil 24 geöffnet (Fig. 2), sodass das durch die erste Einlassöffnung strömende Gas durch die erste Kammer 10 und den Verbindungskanal 22 hindurch in die zweite Kammer 12 strömt und dort das Wasser aus der Kammer 12 verdrängt. Während der Prüfung des Brennstabes 4 mit der ersten Prüfeinrichtung 14 ist somit der gesamte Innenraum des Prüfbehälters 8, also die erste Kammer 10, der Verbindungskanal 22 und die zweite Kammer 12, von Wasser befreit, sodass die Funktionalität der Infrarot-Messung gewährleistet ist.

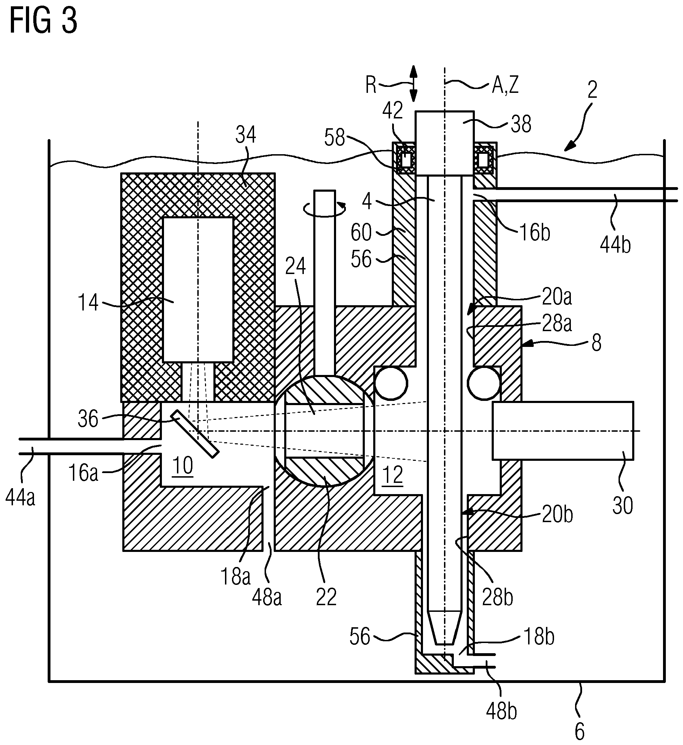

Fig. 3 zeigt eine Vorrichtung 2, bei dem die Dichteinrichtung 40 zwei zusätzliche Prüfgehäuse 56 umfasst, welche den Brennstab 4 und zumindest einen Teil des Handhabungs- bzw. Betätigungsmittel 38 außerhalb des Prüfbehälters 8 vollständig abdecken. Die Prüfgehäuse 56 sind derart an dem Prüfbehälter montiert, dass ein Innenraum der Prüfgehäuse 56 und die zweite Kammer 12 einen gemeinsamen Innenraum ausbilden.

Die Dichteinrichtung 40 umfasst ferner ein mit Gas oder flüssigem Medium befüllbares Dichtelement 42, welches in einer Ausnehmung 54 der Wand 58 des zusätzlichen Prüfgehäuses 56 angeordnet ist und von der Wand 58 des zusätzliche Prüfgehäuses 56 und der Wand 26 des Prüfbehälters gemeinsam gebildeten Führungskanal 28a vollständig umgreift. Zur besseren Darstellung ist das Dichtelement 42 trotz eingeführtem Brennstab 4 und geöffnetem Ventil 24 in einem nicht-befüllten Zustand dargestellt.

Die Vorrichtung umfasst einen in die erste Kammer 10 mündenden ersten Einlasskanal 44a und eine erste Einlassöffnung 16a in der ersten Kammer 10 sowie einen in die zweite Kammer 12 mündenden zweiten Einlasskanal 44b und eine zweite Einlassöffnung 16b in der zweiten Kammer 12. Jede Kammer 10, 12 kann somit unabhängig von der anderen mit Fluid durchströmt und von dem vorhandenen Restwasser befreit werden. Der zweite Einlasskanal 44b wird gemäß Fig. 3 von der Wand 60 des zusätzlichen Prüfgehäuses 56 gebildet und die Einlassöffnung 16b mündet in einem oberen Bereich des zusätzlichen Prüfgehäuses 56 in den Führungskanal 28b. Der an der Unterseite 52 angeordnete Prüfbehälter 56 weist in einem unteren Bereich eine Auslassöffnung 18b auf. Um einen ausreichenden Fluidfluss in der zweiten Kammer 12 zu gewährleisten, ist der Führungskanal 28b gegenüber dem Durchmesser des Brennstabes 4 verbreitert. Somit kann die zweite Kammer 12 in Richtung der Auslassöffnung 18b vollständig entlüftet werden.

Aus der zweiten Kammer 12 kann direkt nach dem Einführen des Brennstabes und der Montage der zusätzlichen Prüfgehäuse 56 das Wasser herausgeblasen werden, sodass auch eine Prüfung bzw. Vorinspektion des Brennstabes 4 mit der zweiten Prüfeinrichtung 30 in einer wasserfreien Umgebung erfolgt. Zur Prüfung einer näher zu untersuchenden Position des Brennstabes 4 kann das Ventil 24 sodann jederzeit während der Prüfung mit der zweiten Prüfeinrichtung geöffnet werden, um eine Prüfung mit der ersten Prüfeinrichtung 14 durchführen zu können, ohne zuvor noch eine Belüftung der zweiten Kammer vornehmen zu müssen, wodurch Zeit gespart wird.

### Bezugszeichenliste

| | | | |
|---|---|---|---|
| 2 | Vorrichtung | 36 | Spiegel |
| 4 | Brennstab | 38 | Handhabungswerkzeug |
| 6 | Becken | 40 | Dichteinrichtung |
| 8 | Prüfbehälter | 42 | Dichtelement |
| 10 | erste Kammer | 44 | Einlasskanal |
| 12 | zweite Kammer | 46 | Austritts- bzw. Eintrittsfenster |
| 14 | erste Prüfeinrichtung | 48a,b | Auslasskanal |
| 16 | Einlassöffnung | 50 | Oberseite |
| 18a,b | Auslassöffnung | 52 | Unterseite |
| 20a | Einführöffnung | 54 | Ausnehmung |
| 20b | Ausführöffnung | 56 | Prüfgehäuse |
| 22 | Verbindungskanal | 58 | Wand |
| 24 | Ventil | | |
| 26 | Wand des Prüfbehälters | R | Richtung |
| 28 | Führungskanal | A | Längsachse |
| 30 | zweite Prüfeinrichtung | Z | Achse |
| 32 | Lichtquelle | | |
| 34 | Abschirmeinrichtung | | |

## Patentansprüche

1. Vorrichtung (2) zur Prüfung eines Brennstabes (4) eines Brennelements in einem mit Wasser gefülltem Becken (6) einer nukleartechnischen Anlage unter Wasser, umfassend einen Prüfbehälter (8) mit einer ersten Kammer (10) und einer zweiten Kammer (12), und eine in der ersten Kammer (10) des Prüfbehälters (8) angeordnete erste Prüfeinrichtung (14), wobei der Prüfbehälter (8) zumindest eine Einlassöffnung (16a, b) , die in die erste Kammer (10) des Prüfbehälters (8) führt, und eine erste Auslassöffnung (18a) in der ersten Kammer (10) und eine zweite Auslassöffnung (18b) in der zweiten Kammer (12) aufweist, wobei die Einlassöffnung (16a) und die Auslassöffnungen (18a, 18b) derart fluidisch miteinander verbindbar sind, dass ein durch die Einlassöffnung (16a, b) in den Prüfbehälter (8) einströmendes Fluid das Wasser aus den Kammern des Prüfbehälters (8) verdrängt und durch die Auslassöffnungen (18a, 18b) herausdrückt, und wobei der Prüfbehälter (8) eine Einführöffnung (20a) zur Einführung des Brennstabes (4) in die zweite Kammer (12) umfasst, und wobei in einem die erste und die zweite Kammer (10, 12) verbindenden Verbindungskanal (22) ein Ventil (24) angeordnet ist.

2. Vorrichtung (2) nach Anspruch 1, bei dem eine zweite Einlassöffnung (16b) in die zweite Kammer (12) des Prüfbehälters (8) führt.

3. Vorrichtung (2) nach einem der Ansprüche 1 oder 2, wobei der Prüfbehälter (8) eine Ausführöffnung (20b) aufweist, die bezüglich einer Achse (Z) hinter der Einführöffnung (20a) liegt.

4. Vorrichtung (2) nach einem der vorhergehenden Ansprüche, mit zumindest einem sich an die Einführöffnung (20a) und/oder die Ausführöffnung (20b) anschließendem, von der Wand (26) des Prüfbehälters (8) gebildeten Führungskanal (28).

5. Vorrichtung (2) nach einem der vorhergehenden Ansprüche, bei der die erste Prüfeinrichtung (14) ein spektroskopisches Messgerät, insbesondere ein Infrarot-Messgerät ist.

6. Vorrichtung (2) nach einem der vorhergehenden Ansprüche, mit einer zweiten Prüfeinrichtung (30), die in der zweiten Kammer (12) des Prüfbehälters (8) angeordnet ist.

7. Vorrichtung (2) nach einem der vorhergehenden Ansprüche mit einer in der zweiten Kammer (12) angeordneten Lichtquelle (32).

8. Vorrichtung (2) nach einem der vorhergehenden Ansprüche, bei der die erste und/oder die zweite Prüfeinrichtung (14, 30) von einer Abschirmeinrichtung (34) umgeben sind.

9. Vorrichtung (2) nach einem der vorhergehenden Ansprüche, mit zumindest einem Spiegel (36), der in der ersten Kammer (10) und/oder in der zweiten Kammer (12) des Prüfbehälters (8) angeordnet ist.

10. Vorrichtung (2) nach einem der vorhergehenden Ansprüche, mit einem Handhabungswerkzeug (38) zur Einführung des Brennstabes (4) in den Prüfbehälter (8) sowie zur Bewegung und Rotation des Brennstabes (4).

11. Vorrichtung (2) nach einem der vorhergehenden Ansprüche, mit einer Dichteinrichtung (40) mit der die zweite Kammer (12) gegenüber dem mit Wasser gefülltem Becken (6) verschließbar ist.

12. Vorrichtung (2) nach einem der vorhergehenden Ansprüche, bei dem die Dichteinrichtung (40) zumindest ein Dichtelement (42) umfasst, welches den zumindest einen Führungskanal (28) vollständig umgreift.

13. Vorrichtung (2) nach einem der vorhergehenden Ansprüche, bei dem die Dichteinrichtung (40) zumindest ein zusätzliches Prüfgehäuse (56) umfasst, welches den Brennstab (4) und zumindest einen Teil des Handhabungs- bzw. Betätigungsmittel (38) außerhalb des Prüfbehälters (8) vollständig abdeckt.

14. Verfahren zur Prüfung eines Brennstabes (4) in einem mit Wasser gefülltem Becken (6) einer nukleartechnischen Anlage unter Wasser mit einer Vorrichtung (2) nach einem der vorhergehenden Ansprüche, wobei der Brennstab (4) bei geschlossenem Ventil (24) durch die Einführöffnung (20a) in die zweite Kammer (12) des Prüfbehälters (8) eingeführt wird, wobei über die zumindest eine Einlassöffnung (16a, b) ein Fluid zugeführt wird, und wobei das Ventil (24) zur Prüfung des Brennstabes (4) mit der ersten Prüfeinrichtung (14) geöffnet wird.

15. Verfahren nach Anspruch 14, bei dem die Zuführung des Fluids während der Prüfung des Brennstabes (4) aufrechterhalten wird.

16. Verfahren nach Anspruch 14 oder 15, bei dem das Ventil (24) geöffnet wird, sobald die Dichteinrichtung (40) die zweite Kammer (12) gegenüber dem mit Wasser gefülltem Becken (6) verschließt.

17. Verfahren nach einem der Ansprüche 14 bis 16, bei dem der Brennstab (4) bei geschlossenem Ventil (24) mit der zweiten Prüfeinrichtung (30) geprüft wird, wobei der Brennstab (4) während der Prüfung entlang einer Richtung (R) auf- und ab bewegt und/oder um eine Längsachse (A) rotiert wird.

## Claims

1. Device (2) for testing a fuel rod (4) of a fuel element in a water-filed basin (6) of a nuclear plant under water, comprising a testing container (8) having a first chamber (10) and a second chamber (12), and a first testing device (14) arranged in the first chamber (10) of the testing container (8), wherein the testing container (8) has at least one inlet opening (16a, b), which leads into the first chamber (10) of the testing container (8), and a first outlet opening (18a) in the first chamber (10) and a second outlet opening (18b) in the second chamber (12), wherein the inlet opening (16a) and the outlet openings (18a, 18b) can be fluidically connected to one another in such a way that a fluid flowing in through the inlet opening (16a, b) into the testing container (8) urges the water out of the chambers of the testing container (8) and pushes it out through the outlet openings (18a, 18b), and wherein the testing container (8) comprises an insertion opening (20a) for inserting the fuel rod (4) into the second chamber (12), and wherein a valve (24) is arranged in a connection channel (22) connecting the first and the second chambers (10, 12).

2. Device (2) according to claim 1, in which a second inlet opening (16b) leads into the second chamber (12) of the testing container (8).

3. Device (2) according to one of claims 1 or 2, wherein the testing container (8) has a discharge opening (20b) which lies behind the insertion opening (20a) with respect to an axis (Z).

4. Device (2) according to one of the preceding claims, having at least one guiding channel (28) adjoining the insertion opening (20a) and/or the discharge opening (20b) and formed by the wall (26) of the testing container (8).

5. Device (2) according to one of the preceding claims, in which the first testing device (14) is a spectroscopic measuring apparatus, in particular an infrared measuring apparatus.

6. Device (2) according to one of the preceding claims, having a second testing device (30) which is arranged in the second chamber (12) of the testing container (8).

7. Device (2) according to one of the preceding claims, having a light source (32) arranged in the second chamber (12).

8. Device (2) according to one of the preceding claims, in which the first and/or the second testing device (14, 30) are surrounded by a shielding device (34).

9. Device (2) according to one of the preceding claims, having at least one mirror (36), which is arranged in the first chamber (10) and/or in the second chamber (12) of the testing container (8).

10. Device (2) according to one of the preceding claims, having a handling tool (38) for inserting the fuel rod (4) into the testing container (8) as well as for moving and rotating the fuel rod (4).

11. Device (2) according to one of the preceding claims, having a sealing device (40) with which the second chamber (12) can be sealed to the water-filled basin (6).

12. Device (2) according to one of the preceding claims, in which the sealing device (40) comprises at least one sealing element (42), which completely encloses the at least one guiding channel (28).

13. Device (2) according to one of the preceding claims, in which the sealing device (40) comprises at least one additional testing housing (56), which completely covers the fuel rod (4) and at least one part of the handling or actuation means (38) outside the testing container (8).

14. Method for testing a fuel rod (4) in a water-filled basin (6) of a nuclear plant under water having a device (2) according to one of the preceding claims, wherein the fuel rod (4) is inserted through the insertion opening (20a) into the second chamber (12) of the testing container (8) when the valve (24) is closed, wherein a fluid is supplied via the at least one inlet opening (16a, b), and wherein the valve (24) is opened for testing the fuel rod (4) with the first testing device (14).

15. Method according to claim 14, in which the supply of the fluid is maintained during the testing of the fuel rod (4).

16. Method according to claim 14 or 15, in which the valve (24) is opened as soon as the sealing device (40) seals the second chamber (12) to the water-filled basin (6).

17. Method according to one of claims 14 to 16, in which the fuel rod (4) is tested by the second testing device (30) when the valve (24) is closed, wherein the fuel rod (4) is moved forward and backward in one direction (R) and/or rotated around a longitudinal axis (A) during the testing.

## Revendications

1. Dispositif (2) servant à contrôler une barre de combustible (4) d'un élément combustible dans un bassin (6) rempli d'eau d'une installation technique nucléaire sous l'eau, comprenant un contenant de contrôle (8) avec un premier compartiment (10) et un deuxième compartiment (12), et un premier dispositif de contrôle (14) disposé dans le premier compartiment (10) du contenant de contrôle (8), dans lequel le contenant de contrôle (8) présente au moins une ouverture d'entrée (16a, b), qui mène dans le premier compartiment (10) du contenant de contrôle (8), et une première ouverture de sortie (18a) dans le premier compartiment (10) et une deuxième ouverture de sortie (18b) dans le deuxième compartiment (12), dans lequel l'ouverture d'entrée (16a) et les ouvertures de sortie (18a, 18b) peuvent être reliées entre elles de manière fluidique de telle manière qu'un fluide affluant dans le contenant de contrôle (8) à travers l'ouverture d'entrée (16a, b) refoule l'eau hors des compartiments du contenant de contrôle (8) et la pousse en dehors par les ouvertures de sortie (18a, 18b), et dans lequel le contenant de contrôle (8) comprend une ouverture d'introduction (20a) servant à introduire la barre combustible (4) dans le deuxième compartiment (12), et dans lequel une soupape (24) est disposée dans un canal de liaison (22) reliant le premier et le deuxième compartiment (10, 12).

2. Dispositif (2) selon la revendication 1, dans lequel une deuxième ouverture d'entrée (16b) mène dans le deuxième compartiment (12) du contenant de contrôle (8).

3. Dispositif (2) selon l'une quelconque des revendications 1 ou 2, dans lequel le contenant de contrôle (8) présente une ouverture d'évacuation (20b), qui se situe derrière l'ouverture d'introduction (20a) par rapport à un axe (Z).

4. Dispositif (2) selon l'une quelconque des revendications précédentes, avec au moins un canal de guidage (28) se raccordant à l'ouverture d'introduction (20a) et/ou à l'ouverture d'évacuation (20b), formé par la paroi (26) du contenant de contrôle (8).

5. Dispositif (2) selon l'une quelconque des revendications précédentes, dans lequel le premier dispositif de contrôle (14) est un appareil de mesure par spectroscopie, en particulier un appareil de mesure à infrarouge.

6. Dispositif (2) selon l'une quelconque des revendications précédentes, avec un deuxième dispositif de contrôle (30), qui est disposé dans le deuxième compartiment (12) du contenant de contrôle (8).

7. Dispositif (2) selon l'une quelconque des revendications précédentes, avec une source de lumière (32) disposée dans le deuxième compartiment (12).

8. Dispositif (2) selon l'une quelconque des revendications précédentes, dans lequel le premier et/ou le deuxième dispositif de contrôle (14, 30) sont entourés par un système de protection (34).

9. Dispositif (2) selon l'une quelconque des revendications précédentes, avec au moins un miroir (36), qui est disposé dans le premier compartiment (10) et/ou dans le deuxième compartiment (12) du contenant de contrôle (8) .

10. Dispositif (2) selon l'une quelconque des revendications précédentes, avec un outil de manipulation (38) servant à introduire la barre de combustible (4) dans le contenant de contrôle (8) ainsi que servant à déplacer et à faire tourner la barre de combustible (4).

11. Dispositif (2) selon l'une quelconque des revendications précédentes, avec un système d'étanchéité (40), avec lequel le deuxième compartiment (12) peut être fermé par rapport au bassin (6) rempli d'eau.

12. Dispositif (2) selon l'une quelconque des revendications précédentes, dans lequel le système d'étanchéité (40) comprend au moins un élément d'étanchéité (42), qui entoure en totalité l'au moins un canal de guidage (28).

13. Dispositif (2) selon l'une quelconque des revendications précédentes, dans lequel le système d'étanchéité (40) comprend au moins un boîtier de contrôle (56) supplémentaire, qui recouvre en totalité la barre de combustible (4) et au moins une partie du moyen de manipulation ou d'actionnement (38) à l'extérieur du contenant de contrôle (8).

14. Procédé servant à contrôler une barre de combustible (4) dans un bassin (6) rempli d'eau d'une installation technique nucléaire sous l'eau, avec un dispositif (2) selon l'une quelconque des revendications précédentes, dans lequel la barre de combustible (4) est introduite par l'ouverture d'introduction (20a) dans le deuxième compartiment (12) du contenant de contrôle (8) lorsque la soupape (24) est fermée, dans lequel un fluide est amené par l'intermédiaire de l'au moins une ouverture d'introduction (16a, b) et dans lequel la soupape (24) est ouverte pour contrôler la barre de combustible (4) avec le premier dispositif de contrôle (14).

15. Procédé selon la revendication 14, dans lequel l'amenée du fluide est maintenue pendant le contrôle de la barre de combustible (4).

16. Procédé selon la revendication 14 ou 15, dans lequel la soupape (24) est ouverte dès que le système d'étanchéité (40) ferme le deuxième compartiment (12) par rapport au bassin (6) rempli d'eau.

17. Procédé selon l'une quelconque des revendications 14 à 16, dans lequel la barre de combustible (4) est contrôlée avec le deuxième dispositif de contrôle (30) lorsque la soupape (24) est fermée, dans lequel la barre de combustible (4) est déplacée en haut et en bas pendant le contrôle le long d'une direction (R) et/ou est tournée autour d'un axe longitudinal (A).
